# EUROPÄISCHE PATENTSCHRIFT

(11) **EP 4 076 915 B1**
(45) Veröffentlichungstag und Bekanntmachung des Hinweises auf die Patenterteilung: **27.09.2023**
(21) Anmeldenummer: 21703205.1
(22) Anmeldetag: 02.02.2021
(51) Int. Cl.: B29C 70/52, B29C 70/70, B29C 70/72, B29D 99/00, B29C 70/68, F16F 1/368, B29L 31/00

(54) **PROFILBAUTEIL AUS EINEM FASERVERBUNDWERKSTOFF FÜR EIN FAHRZEUG**
PROFILE COMPONENT MADE OF A FIBRE-COMPOSITE MATERIAL FOR A VEHICLE
ÉLÉMENT PROFILÉ CONSTITUÉ D'UN MATÉRIAU FIBRE-COMPOSITE POUR UN VÉHICULE

(30) Priorität: 24.02.2020 DE 102020202320
(43) Veröffentlichungstag der Anmeldung: 26.10.2022
(73) Patentinhaber: ZF Friedrichshafen AG, 88046 Friedrichshafen (DE)
(72) Erfinder: STIEGLITZ, Andre, 49086 Osnabrück (DE); MÜLLER, Ingolf, 76872 Minfeld (DE)
(74) Vertreter: ZF Friedrichshafen AG
(86) Internationale Anmeldenummer: PCT/EP2021/052351
(87) Internationale Veröffentlichungsnummer: WO 2021/170349

(56) Entgegenhaltungen:
- DE-A1-102009 053 967
- DE-A1-102010 002 988
- DE-A1-102015 206 917

## Beschreibung

Die Erfindung betrifft ein Profilbauteil aus einem Faserverbundwerkstoff für ein Fahrzeug gemäß dem Oberbegriff des Anspruches 1. Weiterhin betrifft die Erfindung ein Verfahren zur Herstellung eines Profilbauteils aus einem Faserverbundwerkstoff für ein Fahrzeug gemäß dem Oberbegriff des Anspruches 18.

Profilbauteile aus einem Faserverbundwerkstoff für ein Fahrzeug sowie Verfahren zu deren Herstellung sind aus dem Stand der Technik prinzipiell bekannt. So werden Profilbauteile wie beispielsweise Blattfedern aus Faserverbundwerkstoffen hergestellt, wodurch sich gegenüber konventionellen Blattfedern aus Metall eine signifikante Gewichtsreduzierung erreichen lässt. Dabei umfasst das Profilbauteil einen im Pultrusionsverfahren hergestellten Grundkörper, welcher einen in Längsrichtung gekrümmten Verlauf sowie eine in Hochrichtung und Querrichtung konstante Querschnittsgeometrie aufweist.

Profilbauteile aus Faserverbundwerkstoff für ein Fahrzeug sowie Verfahren zu deren Herstellung sind aus der DE 10 2010 047 084 A1 sowie der DE 10 2010 002988 A1 bekannt. Die DE 10 2010 047 084 A1 beschreibt einen kontinuierlich ablaufenden Herstellprozess, bei welchem Faserverbundmaterial durch ein Formwerkzeug zur Formung eines strangförmigen Formkörpers gezogen wird, um einen Faserverbundfederkörper herzustellen. Die dabei erzeugte Querschnittsgeometrie wird mit dem Formwerkzeug im Prozess kontinuierlich eingestellt, um über die Länge des Faserverbundfederkörpers verteilt Abschnitte unterschiedlicher Höhe bzw. Breite bei gleichbleibend rechteckförmiger Querschnittsgeometrie zu erzeugen. Die abschnittsweise Änderung hinsichtlich Höhe bzw. Breite erfolgt, damit sich über die Länge des Faserverbundfederkörpers unterschiedliche Flächenträgheitsmomente einstellen. Die rechteckförmige Querschnittsgeometrie des Faserverbundfederkörpers entspricht dabei der Form der konventionellen Blattfeder aus Metall. Die Umsetzung der lokalen Wandstärkenerhöhungen in Hochrichtung bzw. Querrichtung im kontinuierlich ablaufenden Pultrusionsverfahren ist auf Grund des hohen Aufwands bei der Formung durch das Formwerkzeug und einer geringen Prozesssicherheit nicht effizient umsetzbar.

Bei der Herstellung kontinuierlicher Profilbauteile mit einem Krümmungsradius im Pultrusionsverfahren entsteht infolge des Abzugs von Faserbündeln in Hochrichtung ein deutlicher Gradient des Faservolumengehaltes innerhalb des Querschnittes des Profilbauteils, da sich Verstärkungsfasern verstärkt auf der Innenseite des Profilbauteils anlegen. Die Innenseite des Profilbauteils bildet die dem Formwerkzeug zugewandte Oberfläche mit dem geringsten Krümmungsradius, während die Außenseite des Profilbauteils den größten Krümmungsradius aufweist. Der Faservolumengehalt an der Außenseite des Profilbauteils ist somit geringer als an der Innenseite, wodurch die mechanischen Eigenschaften beeinflusst werden. Die Festigkeit und Steifigkeit des Profilbauteils ist auf der Innenseite infolge des höheren Faservolumengehaltes deutlich höher als in der Außenseite. Die Steigerung des Faservolumengehaltes kann in der Innenkontur zudem soweit erhöht vorliegen, dass die einzelnen Verstärkungsfasern (Einzelfasern eines Rovings oder Faserbündels) nicht ausreichend von der polymeren Matrix benetzt werden und dadurch wirkende Kräfte im Betrieb des Bauteils nicht mehr zwischen den Verstärkungsfasern transportiert werden können. Werden die einzelnen Verstärkungsfasern nicht komplett durch die Matrix umschlossen, so entfällt oder reduziert sich die Stütz-, Schutz- und Kraftumleitungswirkung an der betreffenden Stelle. Außerdem können durch Relativbewegungen der einzelnen Verstärkungsfasern zueinander die Fasern dauerhaft schädigen. Das Resultat ist in diesem Fall eine reduzierte Festigkeit des Verbundwerkstoffes längs zur Faserrichtung. Außerdem werden die Dauerfestigkeitseigenschaften des Profilbauteils hierdurch negativ beeinflusst.

Ausgehend vom vorstehend beschriebenen Stand der Technik ist es nun die Aufgabe der vorliegenden Erfindung, ein Profilbauteil der eingangs genannten Art sowie ein Verfahren zur Herstellung eines Profilbauteils aus einem Faserverbundwerkstoff für ein Fahrzeug bereitzustellen, wobei sich das aus dem Faserverbundwerkstoff hergestellte Profilbauteil durch eine verbesserte innere Struktur und höhere Festigkeit auszeichnet.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des nebengeordneten Anspruchs 18 in Verbindung mit dessen kennzeichnenden Merkmalen. Die hierauf jeweils folgenden, abhängigen Ansprüche geben jeweils vorteilhafte Weiterbildungen der Erfindung wieder.

Die Erfindung sieht demnach ein Profilbauteil aus einem Faserverbundwerkstoff für ein Fahrzeug vor, wobei das Profilbauteil einen im Pultrusionsverfahren hergestellten Grundkörper umfasst, welcher einen in Längsrichtung gekrümmten Verlauf sowie eine in Hochrichtung und Querrichtung konstante Querschnittsgeometrie aufweist. Erfindungsgemäß weist der Grundkörper einen sich zumindest in Hochrichtung verändernden Querschnittsverlauf auf, an welchem zumindest ein Funktionselement mittels stoff- und/oder formschlüssiger Verbindung durchdringungsfrei angeordnet ist. Ein sich zumindest in Hochrichtung verändernder Querschnittsverlauf bedeutet eine Abweichung von einem geraden Verlauf von Seitenflächen zwischen der Innenseite und der Außenseite des Grundkörpers. Die Anpassung des Querschnittsverlaufs erfolgt in Abhängigkeit vom einzustellenden Gradienten des Faservolumengehaltes in Hochrichtung zwischen Innenseite und Außenseite des Grundkörpers. Es stellt sich zwischen der Innenseite und der Außenseite eine Reduzierung der Querschnittsfläche ein. Hierdurch wird erreicht, dass sich der Gradient des Faservolumengehaltes aufgrund der Anpassung des Querschnittsverlaufs in Hochrichtung des Grundkörpers gesehen jeweils nur zwischen dem reduzierten Abstand zur Innenseite und /oder Außenseite einstellt. Um die Einschränkung, die aus der konstanten Querschnittsgeometrie resultiert, d.h. dem Verzicht von lokalen Wandstärkenerhöhungen in Hochrichtung bzw. Querrichtung, zu kompensieren, wird an dem Grundkörper zumindest ein Funktionselement mittels stoff- und/oder formschlüssiger Verbindung durchdringungsfrei angeordnet. Hierbei ist das zumindest eine Funktionselement an dem Grundkörper an einer seiner durch den Querschnittsverlauf geprägten Seitenflächen anliegend angeordnet. Durch die Anordnung zumindest eines Funktionselements kann eine Anpassung einer Verformung unter auf das Profilbauteil aufgeprägter Last ermöglicht werden. Dadurch kann ein teils komplexes Verformungsverhalten und eine gewünschte Einstellung einer Federwirkung erzeugt werden. Durch die durchdringungsfreie Anordnung wird eine Schwächung des Profilbauteils vermieden, die durch das Einbringen eines Verschraubungsloches, insbesondere an einer hoch beanspruchten Stelle, in das aus dem Faserverbundwerkstoff hergestellten Profilbauteil, hervorgerufen würde. Dadurch wird insbesondere das für die Festigkeit des Profilbauteils kritische Trennen der in Längsrichtung verlaufenden Verstärkungsfasern vermieden.

Bevorzugt kann der Querschnittsverlauf sich zumindest abschnittsweise verjüngend ausgeführt sein. Dabei kann sich ein im Wesentlichen trapezförmiger Querschnittsverlauf einstellen. Bevorzugt nimmt dabei die Breite des Grundkörpers in Hochrichtung von der Außenseite zur Innenseite hin ab. Die Querschnittsgeometrie entspricht dabei im Wesentlichen der eines Keilriemens. Ebenfalls denkbar ist ein Querschnittsverlauf, der ausgehend von der Außenseite des Grundkörpers in Hochrichtung bis zum Erreichen einer Ebene im mittleren Bereich des Grundkörpers abnimmt und anschließend bis zum Erreichen der Innenseite wieder zunimmt. Der Gradient des Faservolumengehaltes stellt sich infolge des vorgesehenen Querschnittsverlaufs jeweils nur zwischen dem reduzierten Abstand zur der Innenseite zugewandten Oberfläche des Formwerkzeuges ein. Der Gradient des Faservolumengehaltes ist kleiner als der bei einer quaderförmigen Querschnittsgeometrie. Einen zusätzlichen vorteilhaften Aspekt dieses Querschnittverlaufs stellt die Vergrößerung der seitlichen Anlagefläche dar, an der das Funktionselement an dem Grundkörper anliegt. Unter Anlagefläche wird die der Seitenfläche zugewandte, komplementär ausgeführte Oberfläche des Funktionselementes verstanden, die vollflächig der jeweiligen Querschnittsgeometrie des Grundkörpers folgt und an dieser anliegt.

Insbesondere kann der Querschnittsverlauf zumindest abschnittsweise tailliert ausgeführt sein. Dabei ist zumindest eine Einschnürung in Querrichtung des Grundkörpers zwischen der Innenseite und der Außenseite vorgesehen. Besonders bevorzugt ist dabei ein Querschnittsverlauf, der zu einer im Wesentlichen H-förmigen oder doppel-T-förmigen Querschnittsgeometrie führt. Gegenüber einer beispielsweise im Wesentlichen trapezförmigen Querschnittsgeometrie lässt sich hierdurch ein Gradient des Faservolumengehaltes erreichen, der in den sich jeweils ausbildenden Teilsegmenten der im Wesentlichen H-förmige oder doppel-T-förmige Querschnittsgeometrie kleiner ist als der einer trapezförmigen Querschnittsgeometrie. Der Querschnittsverlauf des Grundkörpers des Profilbauteils wird bevorzugt tailliert ausgeführt, so dass im - in Hochrichtung gesehen - mittleren Bereich des Grundkörpers, welcher bei einer mechanischen Belastung des Profilbauteils durch Biegung eine geringere Last erfährt, da in diesem mittleren Bereich die "neutrale Faser" bei einer Deformation verläuft, dieser dünner gestaltet kann als die hauptsächlich belasteten Randzonen an der Innenseite und der Außenseite des Grundkörpers.

Bevorzugt weist der Querschnittsverlauf zumindest in Hochrichtung einen symmetrischen Verlauf auf. Hierdurch kann die Herstellung des Formwerkzeuges vereinfacht werden. Zudem ist die symmetrische Gestaltung des Grundkörpers vorteilhaft, da dadurch ein gleichmäßigerer Faservolumengehalt ermöglicht wird. Die symmetrische Gestaltung wirkt sich auch auf die mechanische Belastbarkeit des Grundkörpers positiv aus.

Gemäß einer bevorzugten Weiterbildung kann der Grundkörper mit einer offenen Querschnittsgeometrie ausgeführt sein. Darunter ist eine Querschnittsgeometrie zu verstehen, welche einen inneren Kernbereich und profilierte Seitenflächen aufweist. Der Kernbereich kann im Wesentlichen massiv, d.h. mit einer Materialanhäufung in der Fläche von mindestens 25% des Querschnitts, ausgeführt sein. Hingegen weist die jeweilige Seitenfläche eine Profilierung auf, die sich in Hoch- und/oder Querrichtung abschnittsweise zur Mitte des Grundkörpers hin erstreckt.

Gemäß einer bevorzugten Weiterbildung kann der Grundkörper als ein Hohlprofil ausgeführt sein. Insbesondere kann der Grundkörper eine Querschnittsgeometrie aufweisen, die eine Kombination aus einer offenen Querschnittsgeometrie und einem Hohlprofil ist. Bei dieser Querschnittsgeometrie kann die Ausbildung eines Kernbereiches reduziert ausfallen oder sogar ganz entfallen. So sind Mischformen von Querschnittsverläufen denkbar, bei denen sich eine im Wesentlichen H-förmige Querschnittsgeometrie durch Ausnehmungen in Hoch- und Querrichtung einstellt, und zusätzlich zumindest einen geschlossenen Hohlraum im Inneren des Grundkörpers. In den zumindest einen Hohlraum des Grundkörpers ist zumindest ein Funktionselement einführbar.

Dabei kann das Hohlprofil zumindest einen Hohlraum aufweisen. Hierbei kann die äußere Querschnittsgeometrie des als Hohlprofil ausgebildeten Grundkörpers einem Quader entsprechen, in dessen Inneren einer oder mehrere Hohlräume ausgebildet sind. Der zumindest eine Hohlraum kann einen mit dem äußeren Querschnittsverlauf des Grundkörpers korrespondierenden Querschnittsverlauf aufweisen. Alternativ kann der zumindest eine Hohlraum einen von dem äußeren Querschnittsverlauf des Grundkörpers abweichenden Querschnittsverlauf aufweisen. So kann der zumindest eine Hohlraum beispielsweise einen kreisförmigen, ellipsoiden oder polygonen Querschnittsverlauf aufweisen. Weiterhin kann der äußere Querschnittsverlauf des als Hohlprofil ausgebildeten Grundkörpers beispielhaft einem Trapez entsprechen, während der Querschnittsverlauf des zumindest einen Hohlraums korrespondierend oder hiervon abweichend ausgeführt sein kann.

Gemäß einer weiteren vorteilhaften Ausgestaltung kann in der Querschnittsgeometrie des Grundkörpers zumindest eine Hinterschneidung ausbildet sein. Hierdurch ergibt sich eine vergrößerte Anbindungsfläche für das zumindest eine Funktionselement. Zudem wird das zumindest eine Funktionselement bei der Montage durch die Hinterschneidung geführt.

Insbesondere kann sich das zumindest eine Funktionselement abschnittsweise in Längsrichtung des Grundkörpers erstrecken und an den gekrümmten Verlauf angepasst sein. Hierdurch kann eine lokale Versteifung des Profilbauteil erreicht werden, wodurch eine lokale Verformung des Grundkörpers respektive des Profilbauteils einstellbar ist. Dabei können beispielsweise zwei oder mehr Funktionselemente in Längsrichtung des Grundkörpers gesehen beabstandet zueinander angeordnet sein. Alternativ kann sich zumindest ein Funktionselement bis im Wesentlichen über die gesamte Längsausdehnung des Grundkörpers erstrecken.

Gemäß einer bevorzugten Weiterbildung kann das zumindest eine Funktionselement aus einem metallischen Werkstoff bestehen. Bevorzugt wird für das zumindest eine Funktionselement als metallischer Werkstoff Aluminium verwendet. Neben dem geringen Gewicht lässt sich das zumindest eine Funktionselement im Strangpressverfahren herstellen, wodurch komplexe Geometrien darstellbar sind, die mit dem Querschnittsverlauf des Grundkörpers korrespondieren, um eine größtmögliche Anlagefläche zu erreichen.

Hierbei kann das zumindest eine aus einem metallischen Werkstoff bestehende Funktionselement durch Kleben mit dem Grundkörper verbunden sein. Durch das Kleben lässt sich das zumindest eine Funktionselement stoffschlüssig mit dem Grundkörper verbinden. Der sich zumindest in Hochrichtung verändernde Querschnittsverlauf führt dabei zu einer Vergrößerung der Anlagefläche zwischen dem Grundkörper und dem zumindest einen Funktionselement.

Des Weiteren kann das zumindest eine Funktionselement aus einem Kunststoffmaterial bestehen. Insbesondere kann das zumindest eine Funktionselement aus einem thermoplastischen Kunststoffmaterial bestehen. Denkbar ist auch, dass das zumindest eine Funktionselement aus einem steifen Schaum besteht. In das aus einem Kunststoffmaterial bestehende zumindest eine Funktionselement kann zudem ein Gewebe oder ein Textil eingebettet sein, welche eine bezüglich der Orientierung der Verstärkungsfasern des Faserverbundwerkstoffes eine um ±45° abweichende Orientierung zur Aufnahme von Schubkräften aufweisen.

Dabei kann das zumindest eine aus einem Kunststoffmaterial bestehende Funktionselement durch Spritzgießen mit dem Grundkörper verbunden sein. In Abhängigkeit von dem sich zumindest in Hochrichtung verändernden Querschnittsverlauf lässt sich das zumindest eine Funktionselement stoff- und formschlüssiger mit dem Grundkörper verbinden.

Gemäß einer bevorzugten Weiterbildung kann das zumindest eine Funktionselement durch Fügen mit dem Grundkörper verbunden sein. Bei einer Ausgestaltung des Grundkörpers mit Hinterschneidungen und/oder als Hohlprofil lässt sich das zumindest eine Funktionselement durch Fügen mit dem Grundkörper durchdringungsfrei verbinden.

Das zumindest eine Funktionselement bildet oder weist, unabhängig von der Materialwahl, mit dem sich verändernden Querschnittsverlauf korrespondierende Segmente aus bzw. auf, die formschlüssig mit dem Grundkörper verbindbar sind.

Bevorzugt kann das zumindest eine Funktionselement den Grundkörper in Umfangsrichtung zumindest abschnittsweise umschließen. Hierdurch kann ein Schutz des Grundkörpers vor Beschädigungen erreicht werden. Dabei kann das zumindest eine Funktionselement den Grundkörper beispielsweise halbschalenförmig umschließen. Das zumindest eine Funktionselement kann den Grundkörper in Umfangsrichtung auch vollständig umschließen.

Des Weiteren kann das zumindest eine Funktionselement zur Verbindung zweier im Wesentlichen parallel zueinander verlaufender Profilbauteile eingerichtet sein. Dabei umschließt das zumindest eine Funktionselement die beiden parallel zueinander verlaufenden Profilbauteile in Umfangsrichtung des Grundkörpers zumindest abschnittsweise. So kann eine Überlappung der beiden Profilbauteile durch das zumindest eine Funktionselement im Bereich der Seitenflächen vorgesehen sein. Dazu kann beiderseits der Grundkörper jeweils zumindest ein Funktionselement angeordnet sein, das die Grundkörper nur an den Seitenflächen abschnittsweise überdeckt bzw. überlappt. Darüber hinaus ist eine halbschalenförmige Anordnung zumindest zweier Funktionselemente denkbar, welche die die Grundkörper an den Seitenflächen vollständig überdeckt bzw. überlappt und die Innenseite und/oder Außenseite nur abschnittsweise. Ebenfalls ist eine vollständige Umschließung des Grundkörpers in Umfangsrichtung durch das zumindest eine Funktionselement möglich. Durch das zumindest eine Funktionselement lässt sich eine Vorspannung auf das Profilbauteil durch Zusatzfedern aufprägen, um Spannungsspitzen zu kompensieren.

Insbesondere kann das zumindest eine Funktionselement zur Lasteinleitung in das Profilbauteil eingerichtet sein. Durch eine formschlüssige Verbindung mehrerer Profilbauteile entlang des gekrümmten Verlaufs des Grundkörpers mittels zumindest eines Funktionselements, das teilweise mittels der Hinterschneidungen in den Grundkörper integriert ist, lässt sich im Gegensatz zu einer lokalen Verbindung dadurch eine ergänzende und verbesserte Lasteinleitung in das Profilbauteil erreichen. So können lokal Deformationen des Profilbauteils gezielt ermöglicht oder reduziert werden.

Das zumindest eine stoff- und/oder formschlüssig an dem Grundkörper angeordnete aus einem metallischen Material und/oder einem Kunststoffmaterial bestehende Funktionselement wird zur Lasteinleitung genutzt und verteilt infolge des vorzugsweise taillierten Querschnittverlaufs des Grundkörpers mechanische Belastungen auf unterschiedliche Bereiche des Querschnitts.

Vorzugsweise kann das Profilbauteil als eine Blattfeder ausgeführt sein. Insbesondere kann die Blattfeder als Querblattfeder oder Längsblattfeder ausgeführt sein. Durch eine als Luft- oder Balgfeder ausgeführte Zusatzfeder, die durch das zumindest eine Funktionselement mit dem als Längsblattfeder ausgeführten Profilbauteil verbunden ist, lässt sich eine entgegen einer Auslenkung/Einfederung einer Fahrzeugachse wirkende Vorspannung aufprägen. Die Blattfeder kann auch als eine unterstützende Blattfeder zur Erzeugung einer progressiven Kennlinie in einem Federsystem eines Fahrzeugs ausgeführt sein. Hierzu kommt zur Anbindung einer Zusatzfeder bzw. zur Anbindung an das Federsystem bevorzugt zumindest ein Funktionselement aus einem metallischen Werkstoff zur Anwendung.

Weiterhin kann das zumindest eine Funktionselement in einer Nebenfunktion als Kabel- oder Leitungshalter dienen, welche Signalleitungen zwischen einer Sensorik, beispielsweise zur Überwachung von Fahrzeuglage oder Systemzustand, mit einem Steuergerät des Fahrzeugs verbinden.

Die eingangs gestellte Aufgabe wird zudem durch ein Verfahren zur Herstellung eines Profilbauteils aus einem Faserverbundwerkstoff für ein Fahrzeug mit den Merkmalen des nebengeordneten Anspruch 19 gelöst.

Gemäß dem Anspruch 19 wird ein Verfahren zur Herstellung eines Profilbauteils aus einem Faserverbundwerkstoff für ein Fahrzeug vorgeschlagen, wobei ein Grundkörper im Pultrusionsverfahren hergestellt wird, welcher einen in Längsrichtung gekrümmten Verlauf sowie eine in Hochrichtung und Querrichtung konstante Querschnittsgeometrie aufweist, wobei der Grundkörper mit einem sich zumindest in Hochrichtung verändernden Querschnittsverlauf hergestellt wird, an welchem zumindest ein Funktionselement mittels stoff- und/oder formschlüssiger Verbindung durchdringungsfrei angeordnet wird. Die Herstellung eines Profilbauteils für ein Fahrzeug, insbesondere einer Blattfeder, im Pultrusionsverfahren bedeutet eine erhebliche Steigerung eines kosteneffizienten Einsatzes von Faserverbundwerkstoffen. Eine Änderung des Querschnittsverlaufs an den Seitenflächen des Grundkörpers lässt sich beim Pultrusionsverfahren ohne Mehraufwand realisieren. Insbesondere sind komplexe Verläufe des Querschnittsverlaufs darstellbar, durch die sich vergrößerte Anlageflächen erzeugen lassen, an denen das zumindest eine Funktionselement angeordnet wird.

Das Profilbauteil wird vorzugsweise nach wenigstens einem der Ansprüche 2 bis 18 ausgebildet.

Vorteilhafte Ausführungsformen der Erfindung, die nachfolgend erläutert werden, sind in den Zeichnungen dargestellt, wobei sich gleiche Bezugszeichen auf gleiche, ähnliche oder funktional gleiche Bauteile oder Elemente beziehen. Es zeigt:
- Fig. 1: schematisch einen beispielhaften Ablauf eines Pultrusionsverfahrens zur Herstellung eines Grundkörpers eines als Blattfeder ausgeführten Profilbauteils;
- Fig. 2: schematisch mehrere perspektivische Ansichten von im Pultrusionsverfahren hergestellten Grundkörpern mit unterschiedlicher Querschnittsgeometrie;
- Fig. 3: schematisch mehrere Querschnittsverlaufsansichten von Grundkörpern mit unterschiedlicher Querschnittsgeometrie gemäß Fig. 2;
- Fig. 4: schematisch mehrere Querschnittsverlaufsansichten von als Hohlprofil ausgeführten Grundkörpern mit unterschiedlicher Querschnittsgeometrie;
- Fig. 5: exemplarisch und schematisch Querschnittsverlaufsansichten der Grundkörper gemäß Fig. 2 mit daran angeordneten Funktionselementen;
- Fig. 6: schematisch ein als Blattfeder ausgeführtes Profilbauteil mit zumindest einem daran angeordneten Funktionselement in Seitenansicht; und
- Fig. 7: schematisch und exemplarisch Schnittansichten zweier parallel zueinander angeordneter, als Blattfedern ausgeführter Profilbauteile, die durch zumindest ein Funktionselement miteinander verbunden sind.

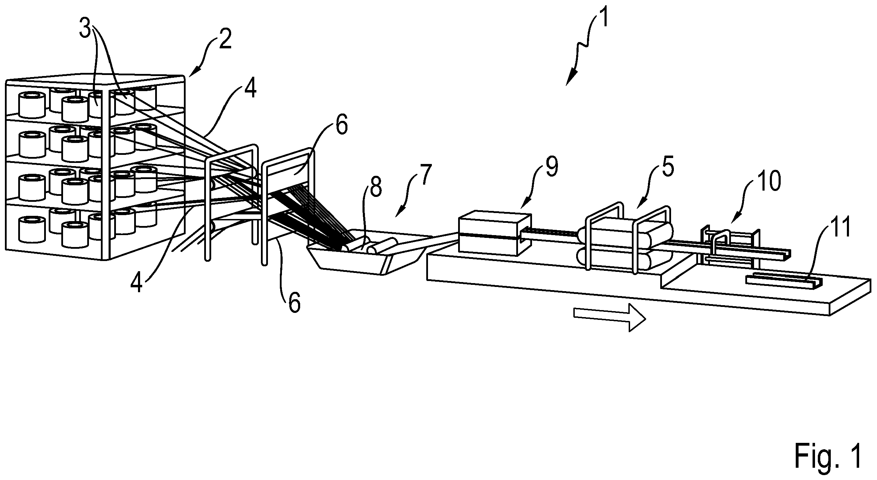

In Fig. 1 ist schematisch ein beispielhafter Ablauf eines Pultrusionsverfahrens zur Herstellung eines profilierten Grundkörpers 11 eines als Blattfeder ausgeführten Profilbauteils mittels einer Pultrusionsanlage 1 dargestellt. Das Ausgangsmaterial bildet eine Verstärkungsfaser 4, welche in Form von auf Spulen 3 aufgewickelten Rovings, d.h. einem Bündel, einem Strang oder einem Multifilamentgarn aus parallel angeordneten Endlosfasern, vorliegen. Die auf den Spulen 3 bereitgestellten Rovings sind in einem Spulengatter 2 angeordnet und werden kontinuierlich abgezogen. Hierzu wird von einer Zugvorrichtung 5 eine Zugkraft gleichzeitig auf alle abgezogenen Verstärkungsfasern 4 aufgebracht, so dass diese kontinuierlich die Pultrusionsanlage 1 durchlaufen. Die Verstärkungsfasern 4 werden entsprechend der gewünschten Form des herzustellenden Grundkörpers 11 des Profilbauteils vororientiert und durchlaufen hierzu beispielsweise Bleche 6 mit entsprechenden Bohrungen. Das Verwenden anderer textiler Halbzeuge ist in dem kontinuierlich ablaufenden Prozess ebenfalls möglich, so dass neben der Längsorientierung der Verstärkungsfasern 4 aus den Rovings ebenfalls Gewebe oder Gelege mit einer unterschiedlichen Faserorientierung, insbesondere einer Faserorientierung von ± 45° zur Längsorientierung der Verstärkungsfasern 4, und/oder mit einer von diesen abweichenden Faserart einbezogen werden können. Die Verstärkungsfasern 4 und gegebenenfalls das zusätzliche Gewebe oder Gelege durchlaufen ein Harzbad 7, in welchem eine polymere Matrix 8 in flüssiger Form vorliegt. Hierbei werden die Verstärkungsfasern 4 und gegebenenfalls das zusätzliche Gewebe benetzt und nehmen somit die erforderliche Matrix 8 zur Herstellung des aus dem Faserverbundwerkstoff bestehenden Grundkörpers 11 auf. Die Verstärkungsfasern 4 werden anschließend in ein beheiztes Formwerkzeug 9 eingezogen, wobei ein Teil der Matrix 8 beim Eintritt und bei der Verdichtung der Verstärkungsfasern 4 aneinander abgestreift wird. Aufgrund des in dem Formwerkzeug 9 wirkenden Druckes und der reduzierten Viskosität des Matrixmaterials infolge der Wärmezufuhr werden die Verstärkungsfasern 4 von der verbleibenden Matrix 8 durchtränkt. Die Matrix 8 wird ausgehärtet, während das Profil das beheizte Formwerkzeug 9 durchläuft. Am Ende der Prozesskette können mit Hilfe einer, insbesondere mitfahrenden, Schneidvorrichtung 10 einzelne profilierte Grundkörper 11 für das Profilbauteil in gewünschter Länge abgetrennt werden. Gemäß einer nicht dargestellten Verfahrensvariante des Pultrusionsverfahrens lässt sich der Grundkörper 11 mit kontinuierlichem Krümmungsradius herstellen. Hierbei wird die Krümmung des Grundkörpers 11 durch die Form des Formwerkzeugs 9 vorgegeben. Dabei wird das Formwerkzeug 9 zur Herstellung des Grundkörpers 11 während des Prozesses mit einem Abschnitt des Grundkörpers 11 kontinuierlich mitbewegt, um währenddessen die polymere Matrix des Profilbauteils auszuhärten. Anschließend wird das Formwerkzeug 9 entgegen der Vorschubrichtung des Grundkörpers 11 zurück in die Ausgangslage verfahren. Anschließend wird das Formwerkzeug 9 erneut mit dem nächsten Abschnitt auf der Kreisbahn bewegt. Durch dieses Verfahren lassen sich gekrümmte Bauteile und Spiralbauteile aus Faserverbundwerkstoffen effizient herstellen.

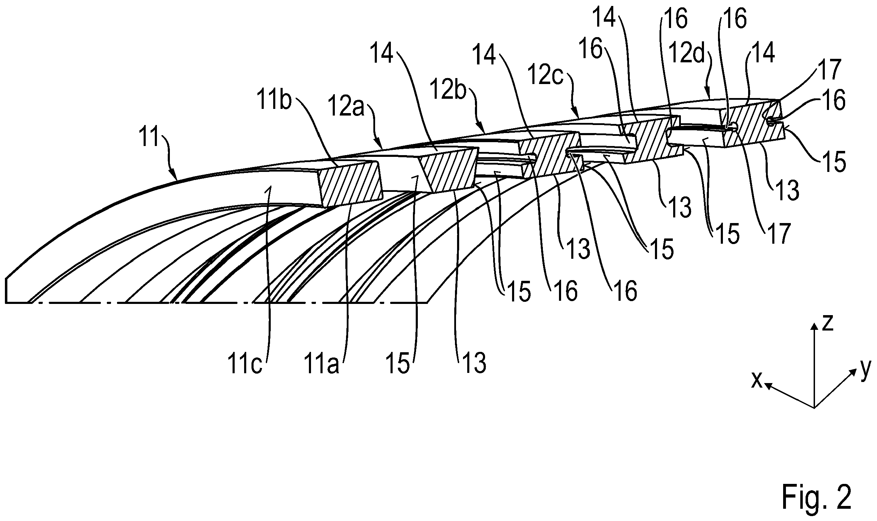

Die Darstellung in Fig. 2 zeigt schematisch mehrere perspektivische Ansichten von im Pultrusionsverfahren hergestellten Grundkörpern 11, 12a, 12b, 12c, 12d mit unterschiedlicher Querschnittsgeometrie. Der Grundkörper 11 weist einen in Längsrichtung x gekrümmten Verlauf sowie eine in Hochrichtung z und Querrichtung y konstante Querschnittsgeometrie auf. Den nachstehend beschriebenen Grundkörpern 11, 12a 12b, 12c, 12d und 12e ist gemeinsam, dass der Querschnittsverlauf zumindest in Hochrichtung einen symmetrischen Verlauf aufweist. Insbesondere sind die Grundkörper 11, 12a 12b, 12c, 12d und 12e spiegelsymmetrisch zur Hochachse z ausgebildet.

Die Querschnittsgeometrie des Grundkörper 11 ist quaderförmig ausgeführt, was der herkömmlichen Form einer aus dem Stand der Technik bekannten Blattfeder aus einem metallischen Werkstoff entspricht. Der Grundkörper 11 weist eine Innenseite 11a, eine Außenseite 11b sowie zueinander parallele Seitenflächen 11c auf. Die Innenseite 11a des Profilbauteils bildet die dem Formwerkzeug 9 zugewandte Oberfläche mit dem geringsten Krümmungsradius, während die Außenseite 11b des Profilbauteils den größten Krümmungsradius aufweist. Bei der Herstellung kontinuierlicher Profilbauteile mit einem Krümmungsradius im Pultrusionsverfahren entsteht infolge des Abzugs von Faserbündeln ein deutlicher Gradient des Faservolumengehaltes innerhalb des quaderförmig Querschnittes in dessen Hochrichtung x, da sich die Verstärkungsfasern 4 verstärkt auf der Innenseite 11a des Grundkörpers 11 anlegen. Auf der Innenseite 11a entsteht infolge des Abzugs an den durchlaufenden Verstärkungsfasern 4 ein höherer Faservolumengehalt als auf der Außenseite 11b, wodurch die mechanischen Eigenschaften deutlich beeinflusst werden. Die Festigkeit und Steifigkeit des Grundkörpers 11 bzw. des Profilbauteils ist auf der Innenseite 11a infolge des höheren Faservolumengehaltes deutlich höher als auf der Außenseite 11b. Die Steigerung des Faservolumengehaltes kann in der Innenkontur des Grundkörpers 11 zudem soweit erhöht vorliegen, dass die einzelnen Filamente (Einzelfasern eines Rovings/Faserbündels) nicht ausreichend von der Matrix benetzt werden und dadurch wirkende Kräfte im Betrieb des Profilbauteils nicht mehr zwischen den Fasern transportiert werden können

Mit 12a ist eine erste Ausführungsform eines erfindungsgemäßen Grundkörpers bezeichnet, der im Pultrusionsverfahren hergestellt wird, um eine gleichmäßigeren Faservolumengehalt zu erreichen. Der Grundkörper 12a weist entsprechend eine Innenseite 13, eine Außenseite 14 sowie Seitenflächen 15 auf. Die Innenseite 13 und die Außenseite 14 verlaufen parallel zueinander in Längs- und Querrichtung x, y. Die beiden Seitenflächen 15 verlaufen ebenfalls parallel zueinander in Längs- und Hochrichtung x, z. Der Grundkörper 12a weist eine in Hochrichtung z und Querrichtung y konstante Querschnittsgeometrie auf. Im Unterschied zu dem quaderförmigen Grundkörper 11 weist der Grundkörper 12a jedoch einen sich zumindest in Hochrichtung z verändernden Querschnittsverlauf auf. Im Fall des Grundkörpers 12a weisen die beiden Seitenflächen 15 eine Neigung auf, so dass sich eine im Wesentlichen trapezförmige Querschnittgeometrie ergibt. Diese trapezförmige Querschnittsgeometrie wird durch das Formwerkzeug 9 vorgegeben. Dabei ist die Innenseite 13 schmaler als die Außenseite 14 ausgeführt, so dass sich der Querschnittsverlauf in Hochrichtung z von der Außenseite 14 zur Innenseite 13 hin verjüngt.

Mit 12b ist eine zweite Ausführungsform eines erfindungsgemäßen Grundkörpers des Profilbauteils bezeichnet, der im Pultrusionsverfahren hergestellt wird. Der Grundkörper 12b weist, wie der Grundkörper 12a, eine Innenseite 13, eine Außenseite 14 sowie Seitenflächen 15 auf. Der Grundkörper 12b weist eine in Hochrichtung z und Querrichtung y konstante Querschnittsgeometrie auf. Der Grundkörper 12b weist einen sich zumindest Hochrichtung z und Querrichtung y verändernden Querschnittsverlauf auf. Dazu sind die Seitenflächen 15 mit einer sich abschnittsweise in Hochrichtung z und Querrichtung y erstreckenden Taillierung 16 versehen. Die Taillierung 16 ist im Wesentlichen U-förmig ausgebildet. Die Querschnittsgeometrie des Grundkörpers 12b ist offen ausgeführt, wobei der Grundkörper 12b einen inneren Kernbereich im Bereich um die sogenannte neutrale Faser und durch die Taillierung 16 profilierte Seitenflächen 15 aufweist.

Mit 12c ist eine dritte Ausführungsform eines erfindungsgemäßen Grundkörpers des Profilbauteils bezeichnet, die sich von dem Grundkörper 12b gemäß der zweiten Ausführungsform lediglich durch die Größe der Taillierung 16 an den Seitenflächen 15 unterscheidet. Der Grundkörper 12b und der Grundkörper 12c weisen eine im Wesentlichen H-förmige oder doppel-T-förmige Querschnittsgeometrie auf.

Mit 12d ist eine vierte Ausführungsform eines erfindungsgemäßen Grundkörpers des Profilbauteils bezeichnet, der wie der Grundkörper 12a eine Innenseite 13, eine Außenseite 14 sowie Seitenflächen 15 aufweist. Der Querschnittsverlauf in Hochrichtung des Grundkörpers 12d ist dabei derart ausgebildet, dass sich an der jeweiligen Seitenfläche 15 eine Taillierung 16 mit einer zusätzlichen Hinterschneidung 17 ausbildet.

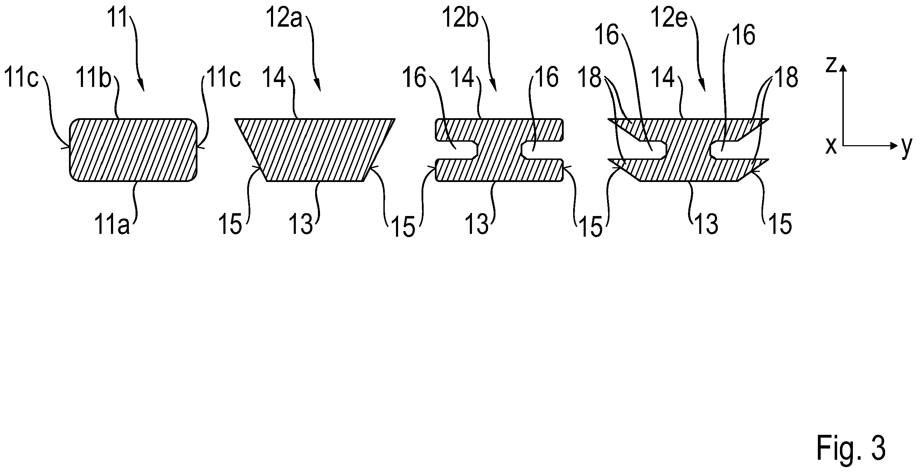

In Fig. 3 sind schematisch mehrere Querschnittsverlaufsansichten von im Pultrusionsverfahren hergestellten Grundkörpern 11, 12a, 12b und 12e mit unterschiedlicher Querschnittsgeometrie dargestellt. Mit 12e ist eine fünfte Ausführungsform eines erfindungsgemäßen Grundkörpers des Profilbauteils bezeichnet. Der Querschnittsverlauf in Hochrichtung z und Querrichtung y des Grundkörpers 12e ändert sich dabei derart, dass sich im Bereich der Innenseite 13 und der Außenseite 14 jeweils ein Abschnitt 18 mit einer im Wesentlichen trapezförmigen Querschnittsgeometrie einstellt, zwischen denen zusätzlich an der jeweiligen Seitenfläche 15 eine Taillierung 16 ausbildet ist. Der Grundkörper 12e weist somit ebenfalls eine im Wesentlichen H-förmige oder doppel-T-förmige Querschnittsgeometrie auf.

Die anhand der in den Fig. 2 und 3 dargestellten offenen Querschnittsgeometrien der Grundkörper 12a, 12b, 12c, 12d, und 12e sind lediglich beispielhaft zu verstehen.

Der sich zumindest in Hochrichtung z verändernde Querschnittsverlauf der Grundkörper 12a, 12b, 12c, 12d, und 12e bewirkt, dass der im Herstellungsprozess durch das Pultrusionsverfahren beim Abziehen auftretenden Problematik der ungleichmäßigen Verteilung sowie ungewollten partiellen Verdichtung der Verstärkungsfasern 4 innerhalb des Formwerkzeugs 9 begegnet wird.

So tritt bei der konventionellen quaderförmigen Querschnittsgeometrie des Grundkörpers 11 auf der Innenseite 11a des Profilbauteils infolge des Abzugs an den durchlaufenden Verstärkungsfasern 4 ein höherer Faservolumengehalt als auf der Außenseite 11b auf, wodurch die mechanischen Eigenschaften deutlich beeinflusst werden. Die Festigkeit und Steifigkeit des Grundkörpers 11 ist auf der Innenseite 11a infolge des höheren Faservolumengehaltes deutlich höher als an der Außenseite 11b. Die Steigerung des Faservolumengehaltes respektive deren Verdichtung kann im Inneren des Grundkörpers 11 zudem soweit erhöht vorliegen, dass die einzelnen Verstärkungsfasern 4 nicht ausreichend von der Matrix 8 benetzt werden und dadurch im Einsatz auf das Profilbauteil einwirkende mechanische Belastungen nicht mehr zwischen den Verstärkungsfasern 4 transportiert werden können. Werden die Verstärkungsfasern 4 nicht vollständig durch die Matrix 8 umschlossen, so entfällt oder reduziert sich die Stütz-, Schutz- und Kraftumleitungswirkung an der betreffenden Stelle.

Durch den sich zumindest in Hochrichtung z verändernden Querschnittsverlauf des Grundkörpers 12a, 12b, 12c, 12d bzw. 12e wird eine gleichmäßigere Verteilung des Faservolumengehalts über den Querschnitt der Grundkörper 12a, 12b, 12c, 12d bzw. 12e erreicht. Der sich abschnittsweise verjüngende, taillierte oder anderweitig komplex gestaltete Querschnittsverlauf des Grundkörpers 12a, 12b, 12c, 12d bzw. 12e ermöglicht einen gleichmäßigeren Faservolumengehalt. Die Auswirkungen des Effektes, dass sich ein Gradient des Faservolumengehaltes vor der Aushärtung der Matrix 8 jeweils von der Innenseite 13, mit einem hohen Faservolumengehalt, zur Außenseite 14, mit einem geringeren Faservolumengehalt, einstellt, werden durch den sich zumindest in Hochrichtung z verändernden Querschnittsverlauf des Grundkörpers 12a, 12b, 12c, 12d bzw. 12e infolge beispielsweise der Verjüngung oder der Taillierung reduziert. Der Gradient des Faservolumengehaltes stellt sich infolge des Querschnittsverlaufs in Hochrichtung z jeweils nur zwischen dem reduzierten Abstand zwischen den Seitenflächen 15 und den Oberflächen des Formwerkzeuges 9 ein.

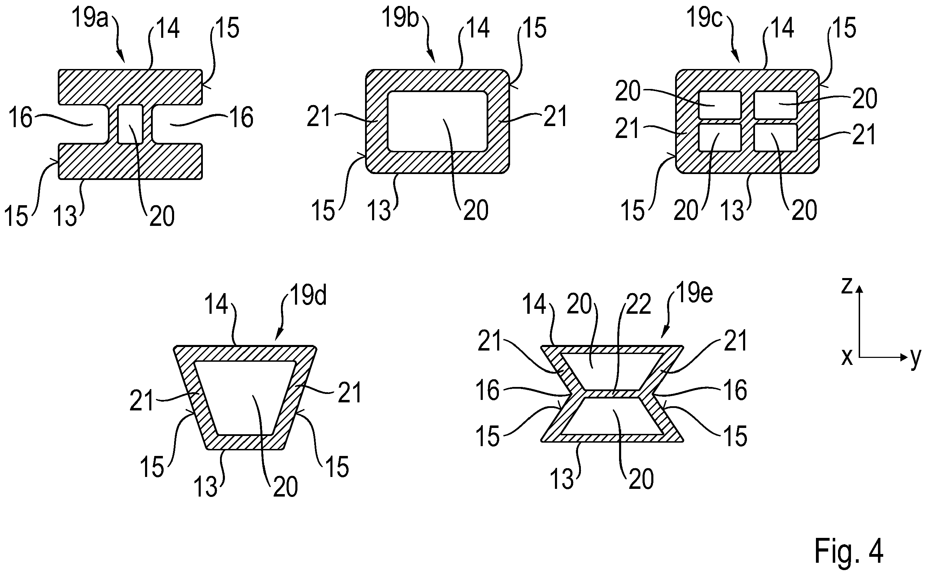

Die Darstellungen in Fig. 4 zeigen schematisch mehrere Querschnittsverlaufsansichten von im Pultrusionsverfahren hergestellten als Hohlprofil ausgeführten Grundkörpern 19a, 19b, 19c, 19d, 19e mit unterschiedlicher Querschnittsgeometrien.

Der Grundkörper 19a weist entsprechend eine Innenseite 13, eine Außenseite 14 sowie Seitenflächen 15 auf. Der Querschnittsverlauf entspricht dabei im Wesentlichen dem des Grundkörpers 12 b gemäß Fig. 4, wobei zusätzlich im Inneren zumindest ein Hohlraum 20 ausgebildet ist. Der zumindest eine Hohlraum 20 ist im Wesentlichen quaderförmig ausgeführt. Der Grundkörper 19a weist eine im Wesentlichen H-förmige Querschnittsgeometrie auf.

Der Grundkörper 19b weist eine im Wesentlichen quaderförmige Querschnittsgeometrie auf. Im Inneren befindet sich ein Hohlraum 20 mit einer Größe, so dass zumindest die Breite der den Hohlraum 20 begrenzenden Wandungen 21 an den Seitenflächen 15 geringer ist, als die Breite des Hohlraums 20.

Der Grundkörper 19c weist ebenfalls eine im Wesentlichen quaderförmige Querschnittsgeometrie auf. Im Inneren befindet sich mehrere Hohlräume 20 mit einer Größe, so dass zumindest die Breite der den Hohlraum 20 begrenzenden Wandungen 21 an den Seitenflächen 15 geringer ist, als die Breite benachbarter, in einer Ebene liegender Hohlräume 20.

Der Grundkörper 19d weist eine im Wesentlichen trapezförmige Querschnittsgeometrie auf, welche dem Grundkörper 12a entspricht. Zudem ist der Querschnitt des Hohlraum 20 im Inneren mit der äußeren Querschnittsgeometrie korrespondierend ebenfalls trapezförmig ausgebildet. Der Grundkörper 19d weist an den Seitenflächen 15 einen sich ausgehend von der Außenseite 14 zur Innenseite 13 hin verjüngenden Querschnittsverlauf auf.

Der Grundkörper 19e weist einen Querschnittsverlauf auf, welcher in Hochrichtung z ausgehend von der Innenseite 13 bzw. von der Außenseite 14 zur Mitte des Grundkörpers 19e hin sich jeweils verjüngend ausgeführt ist. In der Mitte des Grundkörpers 19e verläuft ein Steg 22, welcher die beiden Hohlräume 20 voneinander trennt. An den Seitenflächen 15 bildet sich somit eine Taillierung 16 aus.

Die im Pultrusionsverfahren hergestellten Grundkörper 19a, 19b, 19c, 19d, 19e sind vorzugsweise symmetrisch ausgebildet, wobei die Hochachse z zugleich die Symmetrieachse bilden kann.

Durch die als Hohlprofil ausgeführten Grundkörper 19a, 19b, 19c, 19d, 19e lässt sich bei deren Herstellung im Pultrusionsverfahren der gleiche Effekt der gleichmäßigeren Verteilung des Faservolumengehalts über den Querschnitt erreichen wie bei den mit einer offenen Querschnittsgeometrie ausgeführten Grundkörpern 12a, 12b, 12c, 12d, 12e. Die Querschnittsgeometrie wird im Pultrusionsverfahren durch das Formwerkzeug 9 festgelegt.

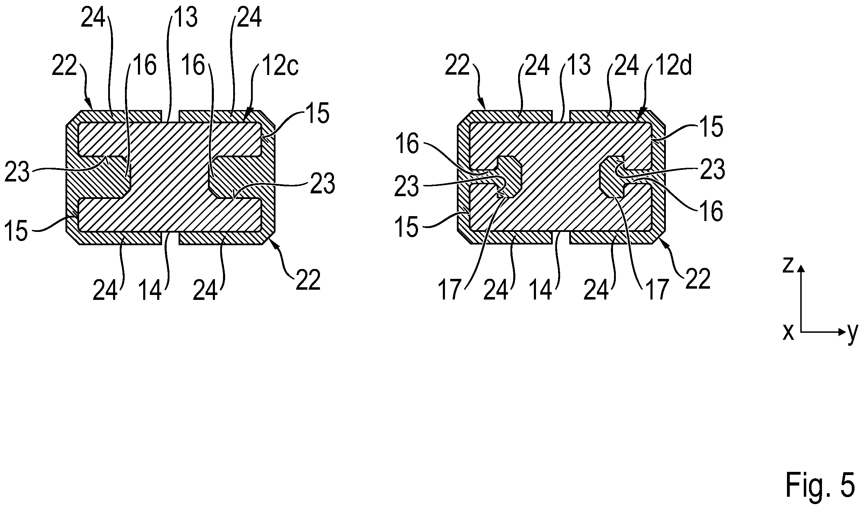

In Fig. 5 sind exemplarisch und schematisch Querschnittsverlaufsansichten der Grundkörper 12c und 12d gemäß Fig. 2 mit daran angeordneten Funktionselementen 22 im Querschnitt dargestellt. Die Funktionselemente 22 können aus einem Kunststoffmaterial oder einem metallischen Material bestehen, beispielsweise Aluminium. Die beiden an dem Grundkörper 12c angeordneten Funktionselemente 22 weisen eine zu dem Querschnittsverlauf des Grundkörpers 12c komplementäre Anlagefläche 23 auf, die der Seitenfläche 15 zugewandt ist. Hierdurch bildet sich eine formschlüssige Verbindung zwischen der Anlagefläche 23 und der Seitenfläche 15 sowie der Taillierung 16 aus. Dazu kann das jeweilige aus Aluminium bestehende Funktionselement 22 im Strangpressverfahren hergestellt sein. Darüber hinaus kann das Funktionselement 22 eine im Wesentlichen C-förmige Außenkontur aufweisen, so dass an dem Funktionselement 22 parallel zur Innenseite 13 und Außenseite 14 des Grundkörpers 12c verlaufende Schenkel 24 diese abschnittsweise überlappen bzw. übergreifen. Zur Fixierung an dem Grundkörper 12c lässt sich das jeweilige Funktionselement 22 zur Herstellung des Formschlusses aufschieben und mittels eines Klebstoffes zusätzlich stoffschlüssig verbinden. Alternativ kann das aus einem, insbesondere thermoplastischen, Kunststoffmaterial bestehende Funktionselement 22 mittels Spritzgussverfahren an dem Grundkörper 12c oder nach der Herstellung im Spritzgussverfahren durch Kleben fixiert werden.

Im Fall des in Fig. 5 dargestellten Grundkörpers 12d, der zusätzlich zur Taillierung 16 Hinterschneidungen 17 aufweist, erfolgt die Anbringung und Fixierung entsprechend der Materialauswahl bei der Herstellung des jeweiligen Funktionselementes 22 entsprechend. Die Anlagefläche 23 des Funktionselements 22 ist komplementär mit der Taillierung 16 und der Hinterschneidung 17 ausgebildet.

Die Funktionselemente 22 sind an den jeweiligen Querschnittsverlauf der Grundkörper 12a, 12b, 12c, 12d, 12e sowie 19a, 19b, 19c, 19d, 19e angepasst, so dass sich die wirksame Anlagefläche 23 des Funktionselementes 22, die an der Seitenfläche 15 anliegt, vergrößert. Im Fall der als Hohlprofile ausgebildeten Grundkörper 19a, 19b, 19c, 19d, 19e wird zumindest ein Funktionselement 22 in den entsprechenden Hohlraum 20 eingeführt und durch Kleben fixiert. Bei den Grundkörpern 19a und 19d können zusätzlich zu dem im Hohlraum 20 befindlichen Funktionselement 22 beidseitig Funktionselemente 22 außen an den Seitenflächen 15 angeordnet sein, wie bei den mit ausschließlich offener Querschnittsgeometrie ausgeführten Grundkörper 12a, 12b, 12c, 12d, 12e.

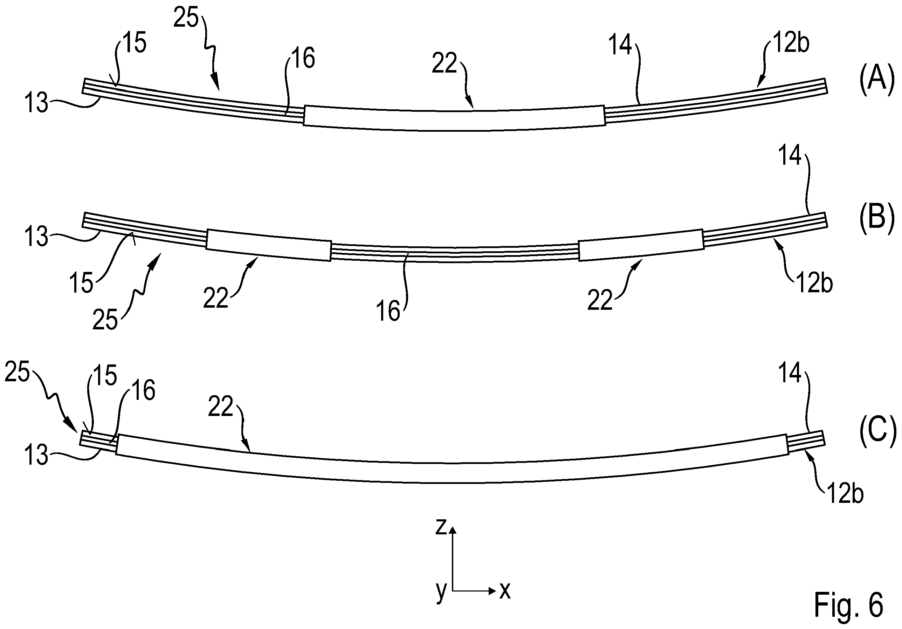

Die Darstellung in Fig. 6 zeigt schematisch ein als Blattfeder ausgeführtes Profilbauteil 25 mit zumindest einem daran angeordneten Funktionselement 22 in Seitenansicht. Im dargestellten Ausführungsbeispiel gemäß Ansicht (A) ist an dem Grundkörper 12b zumindest ein Funktionselement 22 angeordnet. Das zumindest eine Funktionselement 22 ist mit im Wesentlich gleichen Abständen zu den äußeren Enden des Grundkörper 12b an diesem befestigt und erstreckt sich über höchstens 50% der Länge des Grundkörpers 12b. Im dargestellten Ausführungsbeispiel gemäß Ansicht (B) sind an dem Grundkörper 12b beidseitig zumindest zwei Funktionselemente 22 angeordnet. Die zumindest zwei Funktionselemente 22 sind in Längsrichtung x zueinander beabstandet am Grundkörper 12b angeordnet. Im dargestellten Ausführungsbeispiel gemäß Ansicht (C) ist an dem Grundkörper 12b zumindest ein Funktionselement 22 angeordnet. Das zumindest eine Funktionselement 22 erstreckt sich über mehr als 50% der Länge des Grundkörpers 12b. Vorzugsweise erstreckt sich das Funktionselement 22 im Wesentlichen über die Gesamtlänge des Grundkörpers 12b, wobei an den freien Enden Anbindungsbereiche ausgespart werden können. Der in Fig. 6 beispielhaft dargestellte Querschnittsverlauf des Grundkörpers 12b sowie die Gestalt des Funktionselements 22 des Profilbauteils 25 können entsprechend dem weiter oben Gesagten variieren.

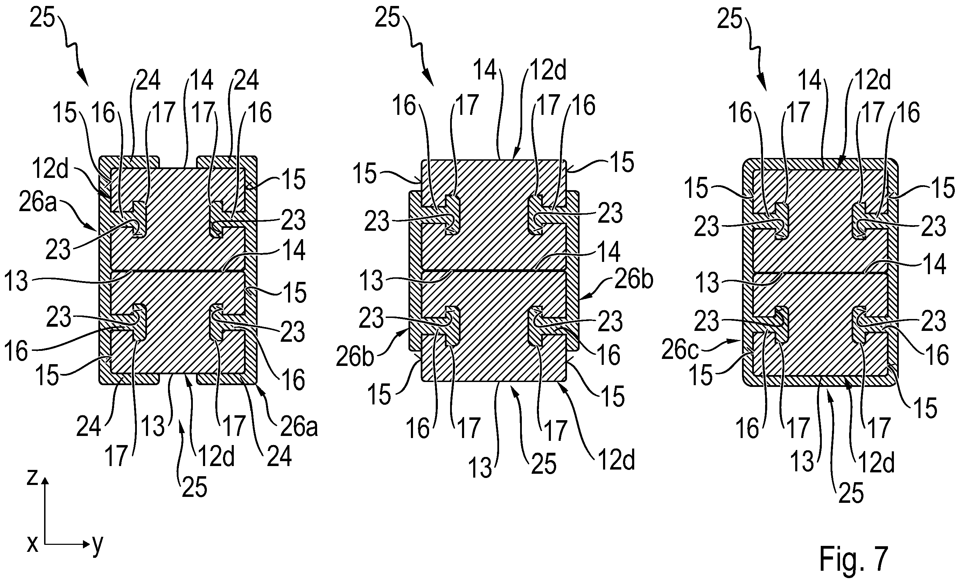

Fig. 7 zeigt schematisch und exemplarisch Schnittansichten zweier parallel zueinander angeordneter, als Blattfedern ausgeführter Profilbauteile 25, die durch zumindest ein Funktionselement 26a, 26b, 26c miteinander verbunden sind. Die beispielhaft dargestellten Profilbauteile 25 sind jeweils mit dem Grundkörper 12d ausgeführt, der zusätzlich zu der jeweiligen Taillierung 16 eine Hinterschneidung 17 aufweist.

Die beiden Funktionselemente 26a gemäß einer ersten Ausführungsform umschlie-ßen die beiden übereinanderliegenden Profilbauteile 25 abschnittsweise an der Innenseite 13 des unteren und der Außenseite 14 des oberen Profilelementes 25 mit ihren Schenkeln 24, die sich in Querrichtung y erstrecken. Die Anlageflächen 23 sind komplementär zum Querschnittsverlauf der Grundkörper 12d ausgebildet.

Die Funktionselemente 26b gemäß einer zweiten Ausführungsform sind derart ausgebildet, dass diese nur an den jeweiligen Seitenflächen 15 der beiden Grundkörper 12d sowie den Taillierungen 16 und Hinterschneidungen 17 anliegen. Die Kombination aus Formschluss und Stoffschluss durch Kleben oder Spritzgießen sorgt für eine ausreichende Stabilität der Anbindung.

Das Funktionselement 26c gemäß einer dritten Ausführungsform ist derart ausgebildet, dass es beide Profilbauteile 25 in Umfangsrichtung vollständig umschließt.

Die Funktionselemente 22, 26a, 26b, 26c können im Zusammenhang mit einem als Blattfeder ausgeführten Profilbauteil 25 verschiedene Funktionen aufweisen. So können die an dem oder den Grundkörpern 12a, 12b, 12c, 12d, 12e, 19a, 19b, 19c, 19d, 19e angeordneten Funktionselemente 22, 26a, 26b, 26c zur Einstellung einer definierten Belastung eines progressiven Federsystems dienen. Weiterhin können die Funktionselemente 22, 26a, 26b, 26c dem Schutz der Profilbauteil 25 vor Beschädigung dienen. Die an dem oder den Grundkörpern 12a, 12b, 12c, 12d, 12e, 19a, 19b, 19c, 19d, 19e angeordneten Funktionselemente 22, 26a, 26b, 26c können einer lokalen Versteifung des Profilbauteils 25 dienen, wodurch das Einstellen einer lokalen Verformung ermöglicht wird. Des Weiteren können die an dem oder den Grundkörpern 12a, 12b, 12c, 12d, 12e, 19a, 19b, 19c, 19d, 19e angeordneten Funktionselemente 22, 26a, 26b, 26c zur Lasteinleitung genutzt werden, welche infolge der insbesondere taillierten Gestalt die Belastungen auf unterschiedliche Bereiche des Querschnitts des Grundkörpers 12a, 12b, 12c, 12d, 12e, 19a, 19b, 19c, 19d, 19e einleiten.

Die formschlüssige Verbindung mehrerer als Blattfedern ausgeführter Profilbauteile 25 durch zumindest eine Funktionselement 22, 26a, 26b, 26c entlang ihrer in Längsrichtung x gekrümmten Bahn, die zudem teilweise durch die Hinterschneidungen 17 in den Grundkörpern 12 in den Querschnittsverlauf integriert sind ermöglichen eine ergänzende und verbesserte Lasteinleitung in die Profilbauteile 25. Lokal werden Deformationen der als Blattfedern ausgeführter Profilbauteile 25 gezielt ermöglicht oder reduziert.

Zudem kann ein Aufprägen einer Vorspannung durch mit dem zumindest einen Funktionselement 22, 26a, 26b, 26c verbundene Zusatzfedern vorgesehen sein, welche entgegen einer Auslenkung/Einfederung einer zu federnden Achse des Fahrzeugs wirkt, um Spannungsspitzen zu kompensieren.

### Bezugszeichen

- 1: Pultrusionsanlage
- 2: Spulengatter
- 3: Spulen
- 4: Verstärkungsfasern
- 5: Zugvorrichtung
- 6: Blech
- 7: Harzbad
- 8: Matrix
- 9: Formwerkzeug
- 10: Schneidvorrichtung
- 11: Grundkörper
- 11a: Innenseite
- 11b: Außenseite
- 11c: Seitenfläche
- 12a: Grundkörper
- 12b: Grundkörper
- 12c: Grundkörper
- 12d: Grundkörper
- 12e: Grundkörper
- 13: Innenseite
- 14: Außenseite
- 15: Seitenfläche
- 16: Taillierung
- 17: Hinterschneidung
- 18: Abschnitt
- 19a: Grundkörper
- 19b: Grundkörper
- 19c: Grundkörper
- 19d: Grundkörper
- 19e: Grundkörper
- 20: Hohlraum
- 21: Wandung
- 22: Funktionselement
- 23: Anlagefläche
- 24: Schenkel
- 25: Profilbauteil
- 26a: Funktionselement
- 26b: Funktionselement
- 26c: Funktionselement

## Patentansprüche

1. Profilbauteil (25) aus einem Faserverbundwerkstoff für ein Fahrzeug, wobei das Profilbauteil (25) als eine Blattfeder ausgeführt ist, welche einen im Pultrusionsverfahren hergestellten Grundkörper (12a, 12b, 12c, 12d, 12e, 19a, 19b, 19c, 19d, 19e) umfasst, welcher einen in Längsrichtung (x) gekrümmten Verlauf sowie eine in Hochrichtung (z) und Querrichtung (y) konstante Querschnittsgeometrie aufweist, **dadurch gekennzeichnet, dass** der Grundkörper (12a, 12b, 12c, 12d, 12e, 19a, 19b, 19c, 19d, 19e) einen sich in Hochrichtung (z) und in Querrichtung (y) verändernden Querschnittsverlauf aufweist, an welchem zumindest ein Funktionselement (22, 26a, 26b, 26c) mittels stoff- und/oder formschlüssiger Verbindung durchdringungsfrei angeordnet ist, wobei das zumindest eine Funktionselement (22, 26a, 26b, 26c) an dem Grundkörper (12a, 12b, 12c, 12d, 12e, 19a, 19b, 19c, 19d, 19e) an einer seiner durch den Querschnittsverlauf geprägten Seitenflächen (15) anliegend angeordnet ist.

2. Profilbauteil (25) nach Anspruch 1, **dadurch gekennzeichnet, dass** der Querschnittsverlauf sich zumindest abschnittsweise verjüngend ausgeführt ist.

3. Profilbauteil (25) nach Anspruch 1 oder 2, **dadurch gekennzeichnet, dass** der Querschnittsverlauf zumindest abschnittsweise tailliert ausgeführt ist.

4. Profilbauteil (25) nach einem der Ansprüche 1 bis 3, **dadurch gekennzeichnet, dass** der Querschnittsverlauf zumindest in Hochrichtung (z) einen symmetrischen Verlauf aufweist.

5. Profilbauteil (25) nach einem der Ansprüche 1 bis 4, **dadurch gekennzeichnet, dass** der Grundkörper (12a, 12b, 12c, 12d, 12e, 19a) mit einer offenen Querschnittsgeometrie ausgeführt ist.

6. Profilbauteil (25) nach einem der Ansprüche 1 bis 5, **dadurch gekennzeichnet, dass** der Grundkörper (19a, 19b, 19c, 19d, 19e) als ein Hohlprofil ausgeführt ist.

7. Profilbauteil (25) nach Anspruch 6, **dadurch gekennzeichnet, dass** das Hohlprofil zumindest einen Hohlraum (20) aufweist.

8. Profilbauteil (25) nach einem der Ansprüche 1 bis 7, **dadurch gekennzeichnet, dass** in der Querschnittsgeometrie des Grundkörpers (12d) zumindest eine Hinterschneidung (17) ausbildet ist.

9. Profilbauteil (25) nach einem der Ansprüche 1 bis 8, **dadurch gekennzeichnet, dass** sich das zumindest eine Funktionselement (22, 26a, 26b, 26c) abschnittsweise in Längsrichtung (x) des Grundkörpers (12a, 12b, 12c, 12d, 12e, 19a, 19b, 19c, 19d, 19e) erstreckt und an den gekrümmten Verlauf angepasst ist.

10. Profilbauteil (25) nach einem der Ansprüche 1 bis 9, **dadurch gekennzeichnet, dass** das zumindest eine Funktionselement (22, 26a, 26b, 26c) aus einem metallischen Werkstoff besteht.

11. Profilbauteil (25) nach Anspruch 10, **dadurch gekennzeichnet, dass** das zumindest eine aus einem metallischen Werkstoff bestehende Funktionselement (22, 26a, 26b, 26c) durch Kleben mit dem Grundkörper (12a, 12b, 12c, 12d, 12e, 19a, 19b, 19c, 19d, 19e) verbunden ist.

12. Profilbauteil (25) nach einem der Ansprüche 1 bis 9, **dadurch gekennzeichnet, dass** das zumindest eine Funktionselement (22, 26a, 26b, 26c) aus einem Kunststoffmaterial besteht.

13. Profilbauteil (25) nach Anspruch 12, **dadurch gekennzeichnet, dass** das zumindest eine aus einem Kunststoffmaterial bestehende Funktionselement (22, 26a, 26b, 26c) durch Spritzgießen mit dem Grundkörper (12a, 12b, 12c, 12d, 12e, 19a, 19b, 19c, 19d, 19e) verbunden ist.

14. Profilbauteil (25) nach einem der Ansprüche 1 bis 13, **dadurch gekennzeichnet, dass** das zumindest eine Funktionselement (22, 26a, 26b, 26c) durch Fügen mit dem Grundkörper (12a, 12b, 12c, 12d, 12e, 19a, 19b, 19c, 19d, 19e) verbunden ist.

15. Profilbauteil (25) nach einem der Ansprüche 1 bis 14, **dadurch gekennzeichnet, dass** das zumindest eine Funktionselement (22, 26a, 26b, 26c) den Grundkörper (12a, 12b, 12c, 12d, 12e, 19a, 19b, 19c, 19d, 19e) in Umfangsrichtung zumindest abschnittsweise umschließt.

16. Profilbauteil (25) nach einem der Ansprüche 1 bis 15, **dadurch gekennzeichnet, dass** das zumindest eine Funktionselement (22, 26a, 26b, 26c) zur Verbindung zweier im Wesentlichen parallel zueinander verlaufender Profilbauteile (25) eingerichtet ist.

17. Profilbauteil (25) nach einem der Ansprüche 1 bis 16, **dadurch gekennzeichnet, dass** das zumindest eine Funktionselement (22, 26a, 26b, 26c) zur Lasteinleitung in das Profilbauteil (25) eingerichtet ist.

18. Verfahren zur Herstellung eines Profilbauteils (25) aus einem Faserverbundwerkstoff für ein Fahrzeug, welches als Blattfeder ausgeführt ist, wobei ein Grundkörper (12a, 12b, 12c, 12d, 12e, 19a, 19b, 19c, 19d, 19e) im Pultrusionsverfahren hergestellt wird, welcher einen in Längsrichtung (x) gekrümmten Verlauf sowie eine in Hochrichtung (z) und Querrichtung (y) konstante Querschnittsgeometrie aufweist, **dadurch gekennzeichnet, dass** der Grundkörper (12a, 12b, 12c, 12d, 12e, 19a, 19b, 19c, 19d, 19e) mit einem sich in Hochrichtung (z) und in Querrichtung (y) verändernden Querschnittsverlauf hergestellt wird, an welchem zumindest ein Funktionselement (22, 26a, 26b, 26c) mittels stoff- und/oder formschlüssiger Verbindung durchdringungsfrei angeordnet wird, wobei das zumindest eine Funktionselement (22, 26a, 26b, 26c) an dem Grundkörper (12a, 12b, 12c, 12d, 12e, 19a, 19b, 19c, 19d, 19e) an einer seiner durch den Querschnittsverlauf geprägten Seitenflächen (15) anliegend angeordnet wird.

19. Verfahren nach Anspruch 18, **dadurch gekennzeichnet, dass** das Profilbauteil (25) nach wenigstens einem der Ansprüche 2 bis 17 ausgebildet wird.

## Claims

1. Profiled component (25) of a fibre composite material for a vehicle, wherein the profiled component (25) is in the form of a leaf spring, which comprises a main body (12a, 12b, 12c, 12d, 12e, 19a, 19b, 19c, 19d, 19e) that is produced by a pultrusion process and has a curved shape in the longitudinal direction (x) and a constant cross-sectional geometry in the vertical direction (z) and transverse direction (y), **characterized in that** the main body (12a, 12b, 12c, 12d, 12e, 19a, 19b, 19c, 19d, 19e) has a varying cross-sectional shape in the vertical direction (z) and in the transverse direction (y) on which at least one functional element (22, 26a, 26b, 26c) is disposed in penetration-free fashion by means of an integral bond and/or form fitting connection, wherein the at least one functional element (22, 26a, 26b, 26c) is disposed on the main body (12a, 12b, 12c, 12d, 12e, 19a, 19b, 19c, 19d, 19e) so as to bear against one of its side surfaces (15) that is formed by the cross-sectional shape.

2. Profiled component (25) according to Claim 1, **characterized in that** the cross-sectional shape narrows at least in certain portions.

3. Profiled component (25) according to Claim 1 or 2, **characterized in that** the cross-sectional shape tapers at least in certain portions.

4. Profiled component (25) according to one of Claims 1 to 3, **characterized in that** the cross-sectional shape is symmetrical at least in the vertical direction (z).

5. Profiled component (25) according to one of Claims 1 to 4, **characterized in that** the main body (12a, 12b, 12c, 12d, 12e, 19a) has an open cross-sectional geometry.

6. Profiled component (25) according to one of Claims 1 to 5, **characterized in that** the main body (19a, 19b, 19c, 19d, 19e) is in the form of a hollow profile.

7. Profiled component (25) according to Claim 6, **characterized in that** the hollow profile has at least one cavity (20).

8. Profiled component (25) according to one of Claims 1 to 7, **characterized in that** at least one undercut (17) is formed in the cross-sectional geometry of the main body (12d).

9. Profiled component (25) according to one of Claims 1 to 8, **characterized in that** the at least one functional element (22, 26a, 26b, 26c) at least in certain portions extends in the longitudinal direction (x) of the main body (12a, 12b, 12c, 12d, 12e, 19a, 19b, 19c, 19d, 19e) and is matched to the curved shape.

10. Profiled component (25) according to one of Claims 1 to 9, **characterized in that** the at least one functional element (22, 26a, 26b, 26c) consists of a metallic material.

11. Profiled component (25) according to Claim 10, **characterized in that** the at least one functional element (22, 26a, 26b, 26c) consisting of a metallic material is connected to the main body (12a, 12b, 12c, 12d, 12e, 19a, 19b, 19c, 19d, 19e) by adhesive bonding.

12. Profiled component (25) according to one of Claims 1 to 9, **characterized in that** the at least one functional element (22, 26a, 26b, 26c) consists of a plastics material.

13. Profiled component (25) according to Claim 12, **characterized in that** the at least one functional element (22, 26a, 26b, 26c) consisting of a plastics material is connected to the main body (12a, 12b, 12c, 12d, 12e, 19a, 19b, 19c, 19d, 19e) by injection moulding.

14. Profiled component (25) according to one of Claims 1 to 13, **characterized in that** the at least one functional element (22, 26a, 26b, 26c) is connected to the main body (12a, 12b, 12c, 12d, 12e, 19a, 19b, 19c, 19d, 19e) by joining.

15. Profiled component (25) according to one of Claims 1 to 14, **characterized in that** the at least one functional element (22, 26a, 26b, 26c) surrounds the main body (12a, 12b, 12c, 12d, 12e, 19a, 19b, 19c, 19d, 19e) circumferentially at least in certain portions.

16. Profiled component (25) according to one of Claims 1 to 15, **characterized in that** the at least one functional element (22, 26a, 26b, 26c) is configured for connection of two profiled components (25) that extend substantially parallel to one another.

17. Profiled component (25) according to one of Claims 1 to 16, **characterized in that** the at least one functional element (22, 26a, 26b, 26c) is designed to introduce load into the profiled component (25).

18. Process for producing a profiled component (25) from a fibre composite material for a vehicle, which is in the form of a leaf spring, wherein a main body (12a, 12b, 12c, 12d, 12e, 19a, 19b, 19c, 19d, 19e) is produced by a pultrusion process and has a curved shape in the longitudinal direction (x) and a constant cross-sectional geometry in the vertical direction (z) and transverse direction (y), **characterized in that** the main body (12a, 12b, 12c, 12d, 12e, 19a, 19b, 19c, 19d, 19e) is produced with a varying cross-sectional shape in the vertical direction (z) and in the transverse direction (y) on which at least one functional element (22, 26a, 26b, 26c) is disposed in penetration-free fashion by means of an integral bond and/or form fitting connection, wherein the at least one functional element (22, 26a, 26b, 26c) is disposed on the main body (12a, 12b, 12c, 12d, 12e, 19a, 19b, 19c, 19d, 19e) so as to bear against one of its side surfaces (15) that is formed by the cross-sectional shape.

19. Method according to Claim 18, **characterized in that** the profiled component (25) is formed according to at least one of Claims 2 to 17.

## Revendications

1. Élément profilé (25) constitué d'une matière composite renforcée par des fibres pour un véhicule, l'élément profilé (25) étant réalisé sous la forme d'un ressort à lames, lequel comprend un corps de base (12a, 12b, 12c, 12d, 12e, 19a, 19b, 19c, 19d, 19e) fabriqué dans un procédé de pultrusion, lequel corps de base présente une allure incurvée dans la direction longitudinale (x) ainsi qu'une géométrie de section transversale constante dans la direction verticale (z) et la direction transversale (y), **caractérisé en ce que** le corps de base (12a, 12b, 12c, 12d, 12e, 19a, 19b, 19c, 19d, 19e) présente une allure de section transversale variant dans la direction verticale (z) et dans la direction transversale (y),
sur laquelle au moins un élément fonctionnel (22, 26a, 26b, 26c) est disposé sans pénétration, au moyen d'une liaison de matière et/ou par complémentarité de formes, l'au moins un élément fonctionnel (22, 26a, 26b, 26c) étant disposé sur le corps de base (12a, 12b, 12c, 12d, 12e, 19a, 19b, 19c, 19d, 19e) de manière à s'appuyer contre l'une de ses surfaces latérales (15) gaufrées à travers l'allure en section transversale.

2. Élément profilé (25) selon la revendication 1, **caractérisé en ce que** l'allure en section transversale est réalisée de manière à se rétrécir au moins dans certaines parties.

3. Élément profilé (25) selon la revendication 1 ou 2, **caractérisé en ce que** l'allure en section transversale est réalisée de manière cintrée au moins dans certaines parties.

4. Élément profilé (25) selon l'une des revendications 1 à 3, **caractérisé en ce que** l'allure en section transversale présente une allure symétrique au moins dans la direction verticale (z).

5. Élément profilé (25) selon l'une des revendications 1 à 4, **caractérisé en ce que** le corps de base (12a, 12b, 12c, 12d, 12e, 19a) est réalisé avec une géométrie de section transversale ouverte.

6. Élément profilé (25) selon l'une des revendications 1 à 5, **caractérisé en ce que** le corps de base (19a, 19b, 19c, 19d, 19e) est réalisé sous la forme d'un profilé creux.

7. Élément profilé (25) selon la revendication 6, **caractérisé en ce que** le profilé creux présente au moins un espace creux (20).

8. Élément profilé (25) selon l'une des revendications 1 à 7, **caractérisé en ce qu'**au moins une contre-dépouille (17) est formée dans la géométrie de section transversale du corps de base (12d).

9. Élément profilé (25) selon l'une des revendications 1 à 8, **caractérisé en ce que** l'au moins un élément fonctionnel (22, 26a, 26b, 26c) s'étend, dans certaines parties, dans la direction longitudinale (x) du corps de base (12a, 12b, 12c, 12d, 12e, 19a, 19b, 19c, 19d, 19e) et est adapté à l'allure incurvée.

10. Élément profilé (25) selon l'une des revendications 1 à 9, **caractérisé en ce que** l'au moins un élément fonctionnel (22, 26a, 26b, 26c) est constitué d'une matière métallique.

11. Élément profilé (25) selon la revendication 10, **caractérisé en ce que** l'au moins un élément fonctionnel (22, 26a, 26b, 26c) constitué d'une matière métallique est relié au corps de base (12a, 12b, 12c, 12d, 12e, 19a, 19b, 19c, 19d, 19e) par collage.

12. Élément profilé (25) selon l'une des revendications 1 à 9, **caractérisé en ce que** l'au moins un élément fonctionnel (22, 26a, 26b, 26c) est constitué d'une matière synthétique.

13. Élément profilé (25) selon la revendication 12, **caractérisé en ce que** l'au moins un élément fonctionnel (22, 26a, 26b, 26c) constitué d'une matière synthétique est relié au corps de base (12a, 12b, 12c, 12d, 12e, 19a, 19b, 19c, 19d, 19e) par moulage par injection.

14. Élément profilé (25) selon l'une des revendications 1 à 13, **caractérisé en ce que** l'au moins un élément fonctionnel (22, 26a, 26b, 26c) est relié au corps de base (12a, 12b, 12c, 12d, 12e, 19a, 19b, 19c, 19d, 19e) par assemblage.

15. Élément profilé (25) selon l'une des revendications 1 à 14, **caractérisé en ce que** l'au moins un élément fonctionnel (22, 26a, 26b, 26c) entoure le corps de base (12a, 12b, 12c, 12d, 12e, 19a, 19b, 19c, 19d, 19e) dans la direction périphérique au moins dans certaines parties.

16. Élément profilé (25) selon l'une des revendications 1 à 15, **caractérisé en ce que** l'au moins un élément fonctionnel (22, 26a, 26b, 26c) est conçu pour la liaison de deux éléments profilés (25) s'étendant sensiblement parallèlement l'un à l'autre.

17. Élément profilé (25) selon l'une des revendications 1 à 16, **caractérisé en ce que** l'au moins un élément fonctionnel (22, 26a, 26b, 26c) est conçu pour l'introduction de charge dans l'élément profilé (25).

18. Procédé de fabrication d'un élément profilé (25) constitué d'une matière composite renforcée par des fibres pour un véhicule, lequel élément profilé est réalisé sous la forme d'un ressort à lames, un corps de base (12a, 12b, 12c, 12d, 12e, 19a, 19b, 19c, 19d, 19e) étant fabriqué dans un procédé de pultrusion, lequel corps de base présente une allure incurvée dans la direction longitudinale (x) ainsi qu'une géométrie de section transversale constante dans la direction verticale (z) et la direction transversale (y), **caractérisé en ce que** le corps de base (12a, 12b, 12c, 12d, 12e, 19a, 19b, 19c, 19d, 19e) est fabriqué avec une allure de section transversale variant dans la direction verticale (z) et dans la direction transversale (y),
sur laquelle au moins un élément fonctionnel (22, 26a, 26b, 26c) est disposé sans pénétration, au moyen d'une liaison de matière et/ou par complémentarité de formes, l'au moins un élément fonctionnel (22, 26a, 26b, 26c) étant disposé sur le corps de base (12a, 12b, 12c, 12d, 12e, 19a, 19b, 19c, 19d, 19e) de manière à s'appuyer contre l'une de ses surfaces latérales (15) gaufrées à travers l'allure en section transversale.

19. Procédé selon la revendication 18, **caractérisé en ce que** l'élément profilé (25) est formé selon au moins l'une des revendications 2 à 17.
